# EUROPÄISCHE PATENTSCHRIFT

(11) **EP 3 322 596 B1**
(45) Veröffentlichungstag und Bekanntmachung des Hinweises auf die Patenterteilung: **06.04.2022**
(21) Anmeldenummer: 16733026.5
(22) Anmeldetag: 21.06.2016
(51) Int. Cl.: B44C 5/04, B27N 7/00

(54) **VERFAHREN ZUR HERSTELLUNG EINES LAMINATES BESTEHEND AUS TRÄGERPLATTE UND DEKORPAPIER**
METHOD FOR THE PREPARATION OF A LAMINATE CONSISTING OF SUPPORT PLATE AND DECORATIVE PAPER
PROCEDE DE FABRICATION D'UN LAMINE COMPRENANT UNE PLAQUE DE SUPPORT ET DU PAPIER DECORATIF

(30) Priorität: 16.07.2015 EP 15177033
(43) Veröffentlichungstag der Anmeldung: 23.05.2018
(73) Patentinhaber: Flooring Technologies Ltd., Kalkara SCM1001 (MT)
(72) Erfinder: KALWA, Norbert, 32805 Horn-Bad Meinburg (DE)
(74) Vertreter: Maikowski & Ninnemann Patentanwälte Partnerschaft mbB
(86) Internationale Anmeldenummer: PCT/EP2016/064291
(87) Internationale Veröffentlichungsnummer: WO 2017/009011

(56) Entgegenhaltungen:
- WO-A1-2012/037950
- WO-A1-2013/032387
- WO-A2-2011/129755
- DE-A1- 10 156 956

## Beschreibung

Die vorliegende Erfindung betrifft ein Verfahren zur Herstellung eines Laminats gemäß der Ansprüche 1 und 3.

### Beschreibung

Bei der Herstellung von Werkstoffplatten, insbesondere in Form von laminierten Werkstoffplatten, werden typischerweise verschiedene Papiere wie zum Beispiel Dekorpapier, Overlays oder Gegenzugpapiere auf einer geeigneten Trägerplatte aufgebracht.

Vor Auftragen der genannten Papiere auf Trägerplatten, wie zum Beispiel Holzfaserträgerplatten, werden die Oberflächen der Trägerplatten zunächst geschliffen, um eine ausreichende Haftung der verwendeten Papiere auf der Oberfläche der Trägerplatten zu gewährleisten.

Der Schleifprozess wird üblicherweise nach einer kurzen Abkühlphase der Trägerplatten nach Verlassen der Presseinheit direkt nach der Herstellung der Trägerplatten durchgeführt. Der Schleifprozess bewirkt ein Abtragen der auf der Ober- und Unterseite der Holzfaserplatten nach dem Verpressen ausgebildeten Presshaut. Diese Presshaut entsteht bei der Herstellung der Holzwerkstoffplatten in den Heißpressen durch den direkten Kontakt der beleimten Partikel und Fasern mit den heißen Pressbändern bei kontinuierlichen Pressen. Bei diesem Kontakt vercracken die Holzfasern und der Leim. Die Presshaut oder verrottete Zone hat eine Dicke von etwa 0,2 mm. Diese Presshaut wird beim Beschichten mit Melaminharz imprägnierten Papieren durch den Harzfluss nicht ausreichend verfestigt und führt dann zu einer Schwachzone in der Deckschicht. Zusätzlich wird durch die Pressbedingungen im Kurztakt (KT)-Prozess (T = 200 °C, T = 10 Sekunden) der Träger in der Deckschicht durch thermische Abbauprozesse geschwächt, was die Ausprägung der Schwachzone noch verstärkt.

Diese Schwachzone ist in einem Densogramm der Platte als Rohdichteabfall erkennbar. Der Rohdichteabfall liegt üblicherweise 0,2-0,3 mm unter der Oberfläche der beschichteten Platte. Dies ist insbesondere bei starker mechanischer Beanspruchung beim Fräsen, wie zum Beispiel bei der Laminatbodenherstellung problematisch.

Um diesem Rohdichteabfall vorzubeugen, wird die mit der Presshaut versehene Oberfläche der Trägerplatte geschliffen, wobei üblicherweise ein Abschliff von 0,1-0,3 mm pro Seite erfolgt. Aus diesem Grund müssen die Platten um eine entsprechende Schleifzugabe eine höhere Dicke aufweisen, wodurch die Herstellungskosten negativ beeinflusst werden. Zum Beispiel muss bei der Herstellung von einem Fußbodenlaminat mit einer Dicke von 7 mm die Trägerplatte vor dem Schliff mindestens eine Dicke von 7,2 mm aufweisen. Der Materialverlust beim Schleifen ist prozentual gesehen bei dünnen Platten besonders hoch, was somit kostenmäßig bei Laminatböden besonders gravierend ist. Hier könnte eine Verfestigung der Schwachzone erhebliche Kostenersparnis durch Einsparen von Material und Arbeitsschritten ermöglichen.

Auch ist aus der EP 2236313 bekannt, dass die Presshaut abgeschliffen werden muss, weil in ihrem Bereich der Wärmeeintrag beim Heißpressen so hoch ist, dass der Klebstoff zu schnell aushärtet, wodurch Leimbrücken brechen, was wiederum zu einer Delaminierung der auf der Trägerplatte aufgebrachten Dekorpapiere führen kann.

Der gegenwärtig angewendete Prozess des Schleifens vor der Beschichtung mit einem Papier, wie zum Beispiel einem Dekorpapier, weist somit die Nachteile von Material- und Zeitverlust, insbesondere bedingt durch einen zusätzlichen Arbeitsgang und zusätzliche Investitionen auf.

Es ist auch bekannt, zur Verklebung von Papieren oder Vorimprägnaten auf Holzwerkstoffplatten Flüssigharze, insbesondere formaldehydhaltige Flüssigharze, auf die Oberfläche des aufzutragen Papiers aufzubringen. Mit oder ohne Zwischentrocknung kann dann das Aufkleben erfolgen (EP 2743094). Hier erfolgt allerdings keine Verfestigung der Deckschicht der Trägerplatte, sondern eine Verklebung von dekorativen Papieren auf der Holzwerkstoffplatte. Zudem wird bei der Verklebung die Schwachzone der Platte nicht übermäßig durch hohe Temperaturen (ca. 200 °C) über einen längeren Zeitraum wie zum Beispiel 10 Sekunden beansprucht. Die Kaschierung von Papieren erfolgt in diesem Falle üblicherweise bei Temperaturen von ca. 160-180 °C und Kontaktzeiten am Presskalander von ca. 1 Sekunde.

Aus der EP 2762328 A1 ist andererseits bekannt, auf die Oberfläche einer Holzwerkstoffplatte ein flüssiges Harz aufzubringen, auf welches in den nachfolgenden Schritten weitere flüssige Schichten in Form von Grundier-und Farbschichten aufgetragen werden, die anschließend getrocknet werden. Allerdings wird hier nicht mit imprägnierten Papieren gearbeitet, sondern vielmehr wird das Dekor in Form von flüssigen Farbschichten auf der ebenfalls flüssigen Grundierungsschicht direkt aufgebracht. Dokument DE10156956 Al offenbart ein Verfahren zur Herstellung eines Laminates, umfassend die Schritte: (a) Bereitstellen einer Trägerplatte, (b) Aufstreuen von einer Schicht aus einem pulverförmigen Harz auf die Trägerplatte, (c) Auflegen von einem Dekorpapier auf die mit dem pulverförmigen Harz versehene Seite der Trägerplatte, und (d) Verpressen des Schichtaufbaus. Dokument WO 2012/037950 A1 offenbart die Beschichtung einer ungeschliffenen und mit Presshaut versehenen Trägerplatte mit einem flüssigen Harz und anschließendem Direkt-Dekordruck.

Der vorliegenden Erfindung liegt daher die technische Aufgabe zugrunde, den Schritt des Abschleifens der Oberfläche von Holzwerkstoffplatten zu vermeiden. Dabei soll durch technische Maßnahmen die verrottete Zone bzw. die Schwachzone soweit verfestigt werden, dass eine Beschichtung mit Dekorpapieren, insbesondere mit imprägnierten Dekorpapieren möglich wird. Dabei sollen in der Weiterverarbeitung keine qualitativen Mängel erkennbar sein. Diese Aufgabe wird durch die Bereitstellung eines Verfahrens mit den Merkmalen des Anspruchs 1 oder 3 gelöst.

Entsprechend wird ein Verfahren zur Herstellung eines Laminates bestehend aus einer Holzwerkstoffplatte und einem auf der Holzwerkstoffplatte angeordnetem Dekorpapier bereitgestellt, wobei das Verfahren die folgenden Schritte umfasst:
a) Bereitstellen der Holzwerkstoffplatte,
b) Aufstreuen von mindestens einer Schicht aus mindestens einem pulverförmigen Harz auf mindestens eine Seite, insbesondere die Oberseite, der Trägerplatte, wobei die die Oberfläche der mit dem pulverförmigen Harz zu bestreuenden Seite der Holzwerkstoffplatte ungeschliffen ist und mit einer Presshaut oder Verrottungsschicht versehen ist;
c) Auflegen von mindestens einem Dekorpapier auf die mit dem pulverförmigen Harz versehene Seite der Holzwerkstoffplatte, und
d) Verpressen des Schichtaufbaus aus Holzwerkstoffplatte, pulverförmigem Harz und Dekorpapier.

Das vorliegende Verfahren ist somit dadurch charakterisiert, dass ein Harz, wie zum Beispiel ein Formaldehydharz, welches häufig in flüssiger Form als Bindemittel und Imprägniermittel fungiert, in fester Form und hier insbesondere als Pulver auf eine Holzwerkstoffplatte als Trägerplatte aufgestreut wird. Somit bildet sich nach dem Aufstreuen des Harzpulvers auf die

Oberseite der Trägerplatte eine Lage bzw. eine Schicht aus einem trockenen pulvrigen Harz aus. Bevorzugt handelt es sich bei der Pulverlage aus einem Harz um eine durchgängige Feststoffschicht, deren Dicke durch die verwendete Harzmenge bestimmt wird.

Durch den Auftrag des pulverförmigen Harzes wird die Oberfläche der Holzwerkstoffplatte im nachfolgenden Verpressungsprozess vergütet. Durch die hohe Temperatur und den Druck werden die Harze (d.h. sowohl das pulverförmige Harz auf der Trägerplatte als auch das Imprägnierharz des Dekorpapieres) verflüssigt und benetzen den Bereich der Deckschicht der Trägerplatte. Gleichzeitig erfolgt die chemische Vernetzung des verwendeten Harzes.

Gemäß dem vorliegenden Verfahren ist die Oberfläche der mit dem pulverförmigen Harz zu bestreuenden Seite der Trägerplatte ungeschliffen, d.h die Oberfläche der vorliegend verwendeten Trägerplatte in Form einer Holzwerkstoffplatte ist mit einer Presshaut oder Verrottungsschicht versehen. Somit entfällt der Schritt des Schleifens der Oberfläche der Holzfasern Werkstoffplatte nach dem Verpressen der Holzfasern und Bindemittel. Der Verzicht auf den Schritt des Abschleifens der Holzwerkstoffplatte verringert somit die Anzahl der Arbeitsschritte und führt somit zu einer Kosten- und Materialeinsparung.

In einer Ausführungsform beträgt die Menge des auf die Oberfläche der Trägerplatte aufgetragenen pulverförmigen Harzes 3-20 g/m², bevorzugt 5-15 g/m², insbesondere bevorzugt 6-10 g/m², z.B. 6, 10 oder 20 g/m². Die Menge an verwendetem Harz ergibt sich aus der Beschaffenheit und Dicke der aus der Pressmaschine kommenden Trägerplatte sowie aus der gewünschten Schichtdicke des pulverförmigen Harzes, welche wiederum durch die zu erreichende Abhebefestigkeit der auf der Trägerplatte aufzubringenden Dekorpapiere bedingt wird. Dabei gilt, dass der gewünschte Effekt mit zunehmender Pulvermenge zunimmt, wobei ein positiver Effekt bereits ab einer Pulvermenge von 3 g/m² auftritt.

Das zum Einsatz kommende pulverförmige Harz weist eine Streudichte von 0,5 bis 1,5 kg/l, bevorzugt 0,8 bis 1,0 kg/l und eine mittlere Partikelgröße von 10 bis 50 µm, bevorzugt 20 bis 30 µm, insbesondere bevorzugt von 25 µm hat.

Das vorliegend verwendete pulverförmige Harz weist nur geringe Spuren von Feuchtigkeit auf. So sollte eine Feuchte von 0,5% nicht überschritten werden, da es ansonsten zur Klumpenbildung kommt und ein Streuen nicht mehr möglich ist.

In einer weitergehenden Variante des vorliegenden Verfahrens wird die mit dem pulverförmigen Harz zu bestreuende Oberfläche bzw. Seite der Trägerplatte vor dem Aufstreuen des pulverförmigen Harzes zur Verbesserung der Haftung des pulverförmigen Harzes auf der Oberfläche der Trägerplatte vorbehandelt. Diese Vorbehandlung kann eine Beaufschlagung der Seite bzw. Oberfläche mit Feuchtigkeit oder eine elektrostatische Aufladung der Seite bzw. Oberfläche der Trägerplatte umfassen.

Im Falle der Beaufschlagung mit Flüssigkeit bzw. Feuchtigkeit können 0,5-5 g Wasser pro m², bevorzugt 1 g bis 2 g Wasser pro m² durch geeignete Vorrichtungen wie zum Beispiel eine Rotorspray-Anlage aufgebracht werden.

Im Falle einer elektrostatischen Aufladung wird eine Oberfläche von einer Platte oder einer Warenbahn unter Verwendung von einer oder mehrerer Elektroden aufgeladen (negativ aufgeladen). Anschließend wird z. B. ein imprägniertes Papier oder ein Pulver aufgebracht. Durch die elektrische Ladung haftet beides aufeinander. Das bei einer elektrostatischen Aufladung verwendete Gerät ist kompakt, was bei einer Nachrüstung in eine bestehende Anlage vom Platzbedarf günstig ist.

Als pulverförmiges Harz wird ein Formaldehydharz, bevorzugt ein Harnstoffharz, ein Melaminharz oder ein Phenolharz, insbesondere bevorzugt ein Melamin-Formaldehyd-Harz, ein Melamin-Phenol-Formaldehyd-Harz oder ein Melamin-Harnstoff-Formaldehydharz verwendet. Aber auch andere Harze wie Epoxidharze können aufgestreut werden.

In einer weiteren Variante des vorliegenden Verfahrens ist es möglich, dass die andere Seite der Trägerplatte, d.h. die der mit dem pulverförmigen Harz zu bestreuende Seite der Trägerplatte gegenüberliegende Seite, ebenfalls mit einem pulverförmigen Harz versehen wird. In diesem Falle wird das pulverförmige Harz auf mindestens eine Seite von mindestens einem Gegenzugpapier aufgestreut und das mit dem Harzpulver bestreute Gegenzugpapier wird mit dem Harz in Richtung der Seite der Trägerplatte angeordnet bzw. die Trägerplatte wird auf das mit dem pulverförmigen Harz bestreute Gegenzugpapier aufgelegt.

Das verwendete pulverförmige Harz weist dabei die gleichen Eigenschaften und die gleiche Zusammensetzung wie das auf die Oberseite der Trägerplatte aufzustreuende Harz auf. In einer Ausführungsform beträgt die Menge des auf die Oberfläche des Gegenzugpapiers aufgetragenen pulverförmigen Harzes 3-20 g/m², bevorzugt 5-15 g/m², insbesondere bevorzugt 6-10 g/m².

Ebenfalls wird die mit dem Gegenzugpapier zu beschichtende Seite der Trägerplatte und/oder die mit dem pulverförmigen Harz zu bestreuende Seite des Gegenzugpapier vor Aufstreuen des pulverförmigen Harzes zur Verbesserung der Haftung des pulverförmigen Harzes vorbehandelt, insbesondere mit Feuchtigkeit beaufschlagt oder elektrostatisch aufgeladen.

Das pulverförmige Harz wird bevorzugt unter Verwendung einer Streuapparatur aufgebracht. Das Aufstreuen erfolgt bevorzugt in einem kontinuierlichen Durchlaufprozess. Eine geeignete Streuapparatur ist der Präzisionsstreuer "Oszillierendes Ausbürstsystem" der Fa. TPS.

Das auf die Schicht aus pulverförmigen Harz aufzulegende Dekorpapier ist bevorzugt ein zumindest teilweise imprägniertes Dekorpapier. Entsprechend kann in dem vorliegenden Verfahren sowohl ein teilweise imprägniertes, d.h. einseitig imprägniertes, Dekorpapier als auch ein vollständig imprägniertes Dekorpapier verwendet werden.

Im Falle eines einseitig imprägnierten Dekorpapiers ist lediglich die gesamte Fläche der nicht bedruckten Unterseite des Dekorpapiers, d.h. die der Sichtseite gegenüberliegende Seite des Dekorpapiers, gleichmäßig mit einem Imprägnierharz versehen. Die Menge des aufgebrachten Harzes liegt in diesem Falle zwischen 30 und 70 Gew%, bevorzugt zwischen 40 und 60 Gew%, insbesondere bevorzugt 50 Gew% bezogen auf das Papiergewicht des Dekorpapiers.

Demgegenüber wird im Falle eines vollständig imprägnierten Dekorpapiers eine Harzmenge von 90-110 Gew% bezogen auf das Papiergewicht des Dekorpapiers aufgetragen.

Aufgrund der reduzierten Menge an aufgetragenem Imprägnierharz weisen einseitig imprägnierte Dekorpapiere eine im Vergleich zu vollständig imprägnierten Papieren reduzierte Dimensionsänderung auf. So beträgt die Dimensionsänderung eines einseitig imprägnierten Dekorpapieres in der Länge 0,2-0,4 % und in der Breite 0,5-0,9 %. Im Vergleich dazu liegen die Werte bei vollständig imprägnierten Papieren in der Länge zwischen 0,4-0,9 % und in der Breite bei 1,2-1,8 %.

Nach Auflegen des zumindest teilweise imprägnierten Dekorpapiers auf die Schicht aus pulverförmigen Harz kann der Schichtaufbau aus Trägerplatte, pulverförmigen Harz und Dekorpapier insbesondere in einer KT Presse verpresst werden. Die Presszeit beträgt zwischen 5 und 60 Sekunden, bevorzugt zwischen 10 und 30 Sekunden. Die Presstemperatur liegt zwischen 150 und 250°C, bevorzugt bei 250°C und der in der Presse angelegte Druck liegt zwischen 10 und 100 bar, bevorzugt zwischen 20 und 60 bar, insbesondere zwischen 30 und 40 bar.

Es ist aber auch denkbar und wünschenswert, nach dem Auftragen und gegebenenfalls Zwischentrocknen des Dekorpapiers auf der Trägerplatte eine weitere Veredelung der Oberfläche vorzunehmen.

Gemäß einer ersten von zwei erfindungsgemäßen Verfahrensvarianten wird nach dem Auflegen des auf der dem Dekor gegenüberliegenden Seite imprägnierten Dekorpapiers auf die Trägerplatte und ggf. einer Zwischentrocknung in einem weiteren Schritt c1) mindestens eine weitere Schicht eines pulverförmigen Harzes auf die Oberseite bzw. Sichtseite des Dekorpapiers aufgetragen bzw. aufgestreut.

Diese weitere aufzutragende Schicht kann lediglich aus einem pulverförmigen Harz bestehen, oder es ist auch möglich ein Gemisch enthaltend das Harz, natürliche und/oder synthetische Fasern, verschleißreduzierende Partikel und ggf. weitere Additive zu verwenden.

Das Pulver setzt sich dabei aus 30 bis 65 Gew%, bevorzugt 40 bis 60 Gew% Fasern, 20 bis 45 Gew%, bevorzugt 30 bis 40 Gew% Bindemittel, 5 bis 25 Gew%, bevorzugt 10 bis 20 Gew% abriebfesten Partikeln und 0 bis 8 Gew%, bevorzugt 0,5 bis 6 Gew% Additiv zusammen.

Gemäß einer zweiten von zwei erfindungsgemäßen Verfahrensvarianten wird nach dem Auflegen des auf der dem Dekor gegenüberliegenden Seite imprägnierten Dekorpapiers auf die Trägerplatte in einem alternativen weiteren Schritt c2) mindestens ein Overlay, insbesondere ein harzimprägniertes Overlay, aufgebracht.

Die natürlichen und / oder synthetischen Fasern sind bevorzugt ausgewählt aus einer Gruppe gebleichte Zellulosefasern oder organische Polymerfasern.

Die abriebfesten Partikel werden bevorzugt ausgewählt aus der Gruppe umfassend Aluminiumoxide, Korund, Borcarbide, Siliziumdioxide, Siliziumcarbide und Glaskugeln, wobei Korund und Glaskugeln besonders bevorzugt sind.

Es ist ebenfalls möglich, dem Gemisch mindestens ein Farbpigment ausgewählt aus einer Gruppe umfassend Titandioxid, Zinkoxide, Eisenoxidpigmente oder Metalleffektpigmente zuzusetzen. Der Variabilität und den Gestaltungsmöglichkeiten sind dabei keine Grenzen gesetzt.

Wie bereits oben erwähnt, ist es auch möglich, dem Gemisch weitere Additive zuzusetzen. Dabei kann dieses mindestens eine Additiv ausgewählt sein aus einer Gruppe umfassend leitfähige Substanzen, Flammschutzmittel, lumineszierende Stoffe und Metalle. Als leitfähige Substanzen werden dabei Kohlefasern und Nanopartikel, insbesondere Kohlenstoffnanoröhren benannt. Typische Flammschutzmittel sind ausgewählt aus der Gruppe umfassend Phosphate, Borate, insbesondere Ammoniumpolyphosphat, Tris(tri-bromneopentyl)phosphat, Zinkborat oder Borsäurekomplexe von mehrwertigen Alkoholen. Als fluoreszierende und phosphoreszierende Stoffe sei insbesondere auf Zinksulfit und Erdalkali-Aluminate hingewiesen.

In einer weiteren Ausführungsform besteht die Trägerplatte aus einem Holzwerkstoff, oder einem Holzwerkstoff-Kunststoffgemisch, wobei insbesondere Span-, mitteldichte Faser (MDF)-, hochdichte Faser (HDF)- Grobspan (OSB) oder Sperrholzplatten bevorzugt sind, oder auch (nicht erfindungsgemäß) eine Zementfaserplatte und/oder (ebenfalls nicht erfindungsgemäß) Gipsfaserplatte verwendet werden kann.

Wie oben ausgeführt wird der Schichtaufbau aus Trägerplatte, pulverförmigem Harz, Dekorpapier und ggf. weiteren Harzschichten verpresst. Vorzugsweise erfolgt das Verpressen des Schichtaufbaus in einer Durchlaufpresse, jedoch besonders bevorzugt in einer Kurztaktpresse. Durch das Verpressen des Schichtaufbaus kommt es zur Ausbildung einer Oberflächenstruktur oberhalb des Dekors, optional in Übereinstimmung mit dem Dekor, in Form eine so genannten "emboss in register".

In einer weiteren Variante des Verfahrens wird auf die nicht mit dem Dekorpapier versehene gegenüberliegende Seite der Trägerplatte mindestens ein Gegenzug aufgebracht, welcher mit dem pulverförmigen Harz bestreut sein kann oder auch nicht mit dem pulverförmigen Harz bestreut ist.

Es ist auch möglich, die mittels des vorliegenden Verfahrens beschichtete Platte zusammen mit einem Gegenzugpapier in eine Kurztaktpresse zu überführen, wobei die Kunstharze bei hohem Druck und hoher Temperatur ausgehärten, wobei wie bereits oben erwähnt, in einer Variante das Auflegen eines Schutzoverlays in Form eines Overlayimprägnats möglich ist. Letzteres kann auch zur Erreichung einer erhöhten Verschleißfestigkeit vorgenommen werden. Dies kann insbesondere bei Einsatz der Bodenbeläge in hochbeanspruchten Objekten nötig sein.

Die mit dem vorliegenden Verfahren hergestellten Laminate umfassen mindestens eine Lage von mindestens einem pulverförmigen Harz aufgestreut auf mindestens eine ungeschliffene Seite einer Trägerplatte und mindestens ein Dekorpapier.

Entsprechend umfasst das vorliegende Laminat mindestens eine Lage von mindestens einem pulverförmigen Harz aufgestreut auf mindestens eine ungeschliffene Seite einer Trägerplatte und mindestens ein Dekorpapier und/oder Gegenzugpapier, wobei das pulverförmige Harz während des Verpressens aufschmilzt und die mindestens eine ungeschliffene Seite der Trägerplatte vergütet, so dass die Trägerplatte mindestens eine mittels des pulverförmigen aufgeschmolzenen Harzes vergütete Seite unterhalb des mindestens einen Dekorpapiers und/oder Gegenzugpapiers aufweist.

Die vorliegende Erfindung wird nachfolgend anhand von mehreren Ausführungsbeispielen mit Verweis auf die Figuren zum besseren Verständnis erläutert und beschrieben. Es zeigen:
- Figur 1: einen Ausschnitt aus einem Densogramm einer Nullprobe eines Laminats, und
- Figur 2: einen Ausschnitt aus einem Densogramm einer Ausführungsform des erfindungsgemäß hergestellten Laminats.

### Ausführungsbeispiel 1:

Auf eine ungeschliffene HDF (Faserplatte mit erhöhter Rohdichte) in einer Stärke von 7 mm wurde im Durchlauf vor einer KT-Presse auf der Oberseite durch eine Rotorspray-Anlage der Fa. Ahlbrandt eine Menge von ca. 1 g Wasser pro / m² aufgebracht. Danach wurden ebenfalls im Durchlauf mit einer Streuapparatur auf der Oberseite 3 g Melaminharzpulver / m² aufgebracht. Die HDF wurde dann auf der Oberseite mit einem mit Melaminharz imprägnierten Dekorpapier und einem Overlay belegt. Auf der Unterseite wurde ein ebenfalls mit Melaminharz imprägniertes Gegenzug-Papier verwendet. Die Platte wurde bei 200°C / 40 bar in einer KT-Presse verpresst. Die Presszeit betrug 10 Sekunden. Die Platte wurde abgekühlt und für die Prüfung bereitgestellt. Zusätzlich wurde eine Nullprobe (ohne Harzauftrag auf der Oberseite) mit produziert.

### Ausführungsbeispiel 2:

Auf eine ungeschliffene HDF (Faserplatte mit erhöhter Rohdichte) in einer Stärke von 7 mm wurde im Durchlauf vor einer KT-Presse die Oberseite mit Hilfe eines Gerätes zur elektrostatischen Aufladung aufgeladen (Hersteller: Fa. Eltex). Danach wurden ebenfalls im Durchlauf mit einer Streuapparatur auf der Oberseite 6 g Melaminharzpulver / m² aufgebracht. Die HDF wurde dann auf der Oberseite mit einem mit Melaminharz imprägnierten Dekorpapier und einem Overlay belegt. Auf der Unterseite wurde ein ebenfalls mit Melaminharz imprägniertes Gegenzug-Papier verwendet. Die Platte wurde bei 200°C / 40 bar in einer KT-Presse verpresst. Die Presszeit betrug 10 Sekunden. Die Platte wurde abgekühlt und für die Prüfung bereitgestellt.

### Ausführungsbeispiel 3:

Auf ein Gegenzug-Imprägnat (100 g/m² Papiergewicht, Harzauftrag: 150%) wurde im Durchlauf vor einer KT-Presse auf der Oberseite durch eine Rotorspray-Anlage der Fa. Ahlbrandt eine Menge von ca. 1 g Wasser pro / m² aufgebracht. Danach wurden ebenfalls im Durchlauf mit einer Streuapparatur auf der Oberseite des Gegenzuges 6 g Melaminharzpulver / m² aufgebracht. Auf diesen Gegenzug wurde eine ungeschliffene 7 mm HDF aufgelegt.

Die HDF-Platte wurde auf der Oberseite durch eine zweite Rotorspray-Anlage der Fa. Ahlbrandt mit einer Menge von ca. 1 g Wasser pro / m² befeuchtet. Danach wurden ebenfalls im Durchlauf mit einer Streuapparatur auf der Oberseite der HDF-Platte 6 g Melaminharzpulver / m² aufgebracht. Danach wurde sie auf der Oberseite mit einem mit Melaminharz imprägnierten Dekorpapier und einem Overlay belegt. Auf der Unterseite wurde ein ebenfalls mit Melaminharz imprägniertes Gegenzug-Papier verwendet. Die Platte wurde bei 200°C / 40 bar in einer KT-Presse verpresst. Die Presszeit betrug 10 Sekunden.

Die Proben aus den Ausführungsbeispielen 1, 2, eine Nullprobe, die unter Verwendung einer ungeschliffenen HDF gemäß Ausführungsbeispiel 1 jedoch ohne pulverförmiges Harz hergestellt worden ist, und eine Vergleichsprobe mit geschliffener HDF-Platte wurden anschließend einer Prüfung unterzogen.

Dabei wurde mit Hilfe eines Cuttermessers ein modifizierter Gitterschnitttest durchgeführt. In die Oberfläche der beschichteten Platten wurde mit Hilfe des Messers Schnitte eingebracht, die zu rautenförmigen Mustern führten. Mit dem Messer wurde dann versucht die Rauten von der Oberfläche abzuschälen. Der Kraftaufwand wurde dann im Vergleich beurteilt. Zusätzlich wurde an den abgeschälten Rauten die Schichtdicke aus Beschichtung und anhaftenden Fasern bestimmt. Die Schichtdicke der Beschichtung (Overlay und Dekor) lag dabei bei ca. 0,15 mm. Tabelle 1 fasst die Ergebnisse zusammen.

**Tabelle 1**

| **Probe** | **Auftragsmenge Melaminharz in g/m²** | **Gitterschnitt (Kraftaufwand** ) | **Schichtdicke in mm** |
|---|---|---|---|
| Nullprobe | 0 | Niedrig | 0,29* |
| Probe 1 | 3 | Mittel | 0,35** |
| Probe 2 | 6 | hoch | 0,39** |
| Vergleichsprobe, geschliffen | 0 | Hoch | 0,42** |

| | | | |
|---|---|---|---|
| * Durch die Fasern ist noch das Dekorpapier erkennbar. ** Die Rückseite der Raute zeigt vollständigen Faserbesatz. | | | |

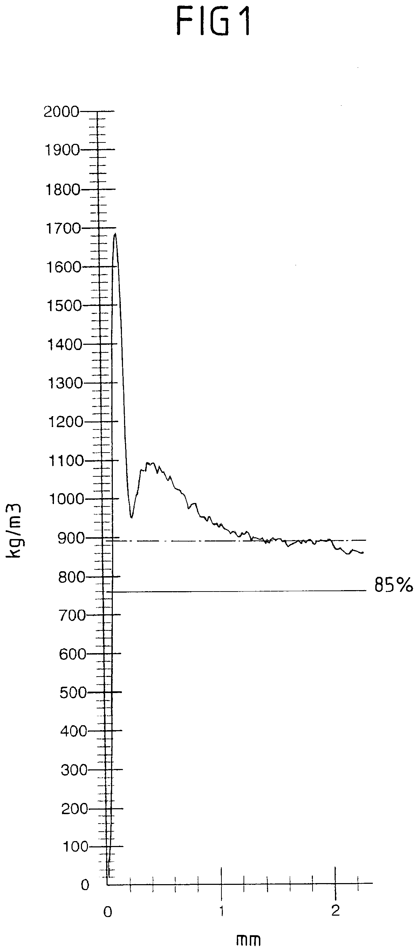

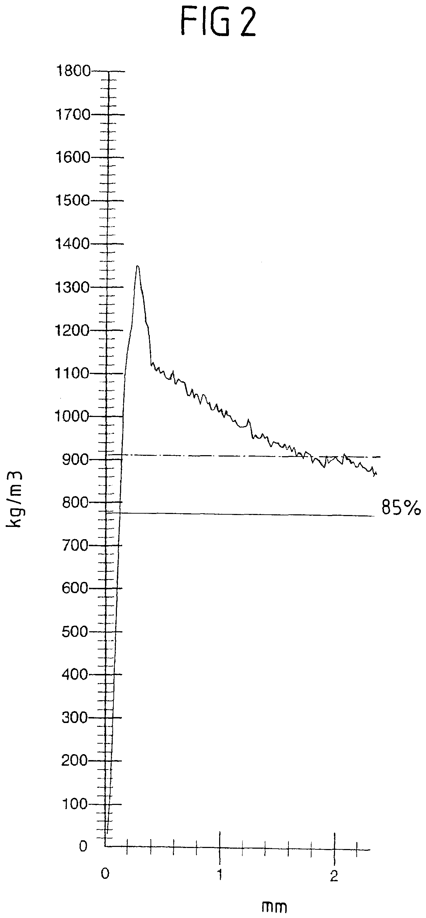

Wie die Tabelle zeigt, steigt der Kraftaufwand, der benötigt wird um die Rauten abzuschälen mit steigender Melaminharzmenge. Auch die Schichtdicke der mitabgeschälten Fasern steigt an. Sie erreicht bei Probe 2 fast den Wert der geschliffenen Platte. Der Unterschied zwischen der Variante mit 6 g Melaminharz-Pulver/m² und der Nullprobe ist bei einem Vergleich der entsprechenden Densogramme (siehe Figuren 1 und 2) erkennbar.

So ist im Falle der Nullprobe (Figur 1) unterhalb der Beschichtung (0,15 mm) und den an der Beschichtung haftenden Fasern ein deutlicher Abfall der Rohdichte erkennbar (von 1700 auf unter 1000 kg/m3). Dieser ist bei der Probe mit 6 g Melaminharz-Pulver (Figur 2) nicht mehr oder nur noch wenig ausgeprägt erkennbar. Diese Zone ist die vercrackte Presshaut. Wenn sie im Densogramm nicht mehr erkennbar ist, ist auch die Schwachzone nicht mehr vorhanden.

Zudem weist das Densogramm der Nullprobe in Figur 1 eine Schulter auf, die auf eine Fehlstelle hinweist. Solche Fehlstellen können zu Delaminierungserscheinungen führen. Diese Fehlstelle tritt bei 6 g/m² Pulver (Figur 2) hingegen nicht mehr auf, so dass Delaminierungserscheinungen vermieden werden.

### Ausführungsbeispiel 4:

In einer weiteren Versuchsreihe wurden verschiedenen Mengen an aufgestreutem Melamin-Formaldehyd-Pulverharzen auf ungeschliffenen HDF mit anschließender Verpressung in einer Laborpresse verglichen.

Die Verpressung wurde mit einem imprägnierten Dekorpapier und einem Overlay auf der Vorderseite und einem imprägnierten Gegenzug auf der Rückseite durchgeführt. Die Preßzeit betrug 10 Sekunden, der Preßdruck betrug 400 N/cm² und die Temperatur lag bei 200°C.

Zur Beurteilung der Verankerung des Aufbaus auf der Oberseite bzw. der Verfestigung der Presshaut, wurde wiederum ein Gitterschntt-Test durchgeführt. Dabei wurde die Haftung der Beschichtung auf der Platte nicht mit Hilfe eines Klebstreifens geprüft, sondern durch Abschälen der eingeschnittenen Oberfläche mit einem Cuttermesser. Die Ergebnisse sind in Tabelle 2 zusammengefasst.

**Tabelle 2**

| Auftragsmenge MF-Pulverharz (g/m²) | Ergebnis Gitterschnitt ( DIN EN ISO 2409 )*) |
|---|---|
| 0 | 5 |
| 10 | 2 |
| 20 | 1 |

| | |
|---|---|
| *) Beurteilung: Stufe 0 = Beschichtung nur mit großem Kraftaufwand kleinflächig ablösbar Stufe 5 = Beschichtung mit wenig Kraftaufwand großflächig ablösbar, Beschichtung löst sich bereits beim Einschneiden der Oberfläche partiell ab | |

Die Ergebnisse des Gitterschnitttest zeigen einen Anstieg des notwendigen Kraftaufwandes mit steigender Auftragsmenge an MF-Harzpuver.

## Patentansprüche

1. Verfahren zur Herstellung eines Laminates bestehend aus einer Holzwerkstoffplatte und einem auf der Holzwerkstoffplatte angeordnetem Dekorpapier
umfassend die Schritte
a) Bereitstellen der Holzwerkstoffplatte ,
b) Aufstreuen von mindestens einer Schicht aus mindestens einem pulverförmigen Harz auf mindestens eine Seite der Holzwerkstoffplatte , wobei die Oberfläche der mit dem pulverförmigen Harz zu bestreuenden Seite der Holzwerkstoffplatte ungeschliffen ist und mit einer Presshaut oder Verrottungsschicht versehen ist;
c) Auflegen von mindestens einem auf der dem Dekor gegenüberliegenden Seite imprägnierten Dekorpapier auf die mit dem pulverförmigen Harz versehene Seite der Holzwerkstoffplatte, und
c2) Aufbringen von mindestens einem Overlay auf das Dekorpapier; und
d) Verpressen des Schichtaufbaus aus Holzwerkstoffplatte, pulverförmigem Harz und Dekorpapier.

2. Verfahren nach Anspruch 1, **dadurch gekennzeichnet, dass** das in Schritt c2) aufzubringende mindestens eine Overlay ein harzimprägniertes Overlay ist.

3. Verfahren zur Herstellung eines Laminates bestehend aus einer Holzwerkstoffplatte und einem auf der Holzwerkstoffplatte angeordnetem Dekorpapier
umfassend die Schritte
a) Bereitstellen der Holzwerkstoffplatte ,
b) Aufstreuen von mindestens einer Schicht aus mindestens einem pulverförmigen Harz auf mindestens eine Seite der Holzwerkstoffplatte , wobei die Oberfläche der mit dem pulverförmigen Harz zu bestreuenden Seite der Holzwerkstoffplatte ungeschliffen ist und mit einer Presshaut oder Verrottungsschicht versehen ist;
c) Auflegen von mindestens einem auf der dem Dekor gegenüberliegenden Seite imprägnierten Dekorpapier auf die mit dem pulverförmigen Harz versehene Seite der Holzwerkstoffplatte , und
c1) Auftragen von mindestens einer weiteren Schicht eines pulverförmigen Harzes auf die Oberseite des Dekorpapiers,
d) Verpressen des Schichtaufbaus aus Holzwerkstoffplatte, pulverförmigem Harz und Dekorpapier.

4. Verfahren nach Anspruch 3, **dadurch gekennzeichnet, dass** die in Schritt c1) aufzutragende Schicht aus einem Gemisch enthaltend das pulverförmige Harz, natürliche und/oder synthetische Fasern, verschleißreduzierende Partikel und ggf. weitere Additive besteht.

5. Verfahren nach Anspruch 4, **dadurch gekennzeichnet, dass** als weiteres Additives mindestens ein Additiv ausgewählt aus einer Gruppe umfassend leitfähige Substanzen, Flammschutzmittel, lumineszierende Stoffe und Metalle verwendet wird.

6. Verfahren nach Anspruch 4, **dadurch gekennzeichnet, dass** eine leitfähige Substanz als weiteres Additiv verwendet wird.

7. Verfahren nach einem der Ansprüche 4 bis 6, **dadurch gekennzeichnet, dass** als natürliche und / oder synthetische Fasern gebleichte Zellulosefasern oder organische Polymerfasern verwendet werden.

8. Verfahren nach einem der Ansprüche 4 bis 7, **dadurch gekennzeichnet, dass** als abriebfesten Partikel Aluminiumoxide, Korund, Borcarbide, Siliziumdioxide, Siliziumcarbide und Glaskugeln verwendet werden.

9. Verfahren nach einem der vorhergehenden Ansprüche, **dadurch gekennzeichnet, dass** das in Schritt b) aufzustreuende pulverförmige Harz in einer Menge von 3 bis 20 g/m², bevorzugt 5 bis 15 g/m², insbesondere bevorzugt 6 bis 10 g/m² auf die Holzwerkstoffplatte aufgetragen wird.

10. Verfahren nach einem der vorhergehenden Ansprüche, **dadurch gekennzeichnet, dass** die in Schritt b)mit dem pulverförmigen Harz zu bestreuende Seite der Holzwerkstoffplatte vor Aufstreuen des pulverförmigen Harzes zur Verbesserung der Haftung des pulverförmigen Harzes vorbehandelt wird.

11. Verfahren nach Anspruch 10, **dadurch gekennzeichnet, dass** die Vorbehandlung der in Schritt b) zu bestreuenden Seite eine Beaufschlagung der Holzwerkstoffplatte mit Feuchtigkeit, oder eine elektrostatische Aufladung der Holzwerkstoffplatte umfasst.

12. Verfahren nach Anspruch 10 oder 11, **dadurch gekennzeichnet, dass** die Vorbehandlung der in Schritt b) zu bestreuenden Seite eine Beaufschlagung der Holzwerkstoffplatte mit 0,5 - 5 g/m² Wasser, bevorzugt 1 bis 2 g/m² Wasser umfasst.

13. Verfahren nach einem der vorhergehenden Ansprüche, **dadurch gekennzeichnet, dass** das in Schritt b) aufzustreuende pulverförmige Harz eine Streudichte von 0,5 bis 1,5 kg/l, bevorzugt 0,8 bis 1,0 kg/l und eine mittlere Partikelgröße von 10 bis 50 µm, bevorzugt 20 bis 30 µm, insbesondere bevorzugt von 25 µm hat.

14. Verfahren nach einem der vorhergehenden Ansprüche, **dadurch gekennzeichnet, dass** das pulverförmige Harz auf mindestens eine Seite von mindestens einem Gegenzugpapier aufgestreut wird und das mit dem Harzpulver bestreute Gegenzugpapier mit dem Harz in Richtung der Seite der Holzwerkstoffplatte angeordnet wird.

## Claims

1. Method for the production of a laminate consisting of a wood-based panel and a decorative paper arranged on the wood-based panel
comprising the steps
a) providing the wood-based panel,
b) scattering at least one layer of at least one pulverulent resin onto at least one side of the wood-based panel, wherein the surface of the side of the wood-based panel to be scattered with the pulverulent resin is unsanded and is provided with a pressed skin or rotting layer;
c) placing at least one decorative paper impregnated on the side opposite to the decor to the side of the wood-based panel which has been provided with the pulverulent resin; and
c2) placing at least one overlay to the decorative paper; and
d) pressing the layered structure of wood-based panel, pulverulent resin and decorative paper.

2. Method of claim 1, **characterized in that** the at least one overlay to be applied in step c2) is a resin-impregnated overlay.

3. Method for the production of a laminate consisting of a wood-based panel and a decorative paper arranged on the wood-based panel
comprising the steps
a) providing the wood-based panel,
b) scattering at least one layer of at least one pulverulent resin onto at least one side of the wood-based panel, wherein the surface of the side of the wood-based panel to be scattered with the pulverulent resin is unsanded and is provided with a pressed skin or rotting layer;
c) applying at least one decorative paper impregnated on the side opposite to the decorative paper to the side of the wood-based panel coated with the pulverulent resin; and
c1) applying at least one further layer of a pulverulent resin to the upper surface of the decorative paper,
d) pressing the layered structure of wood-based panel, pulverulent resin and decorative paper.

4. Method according to claim 3, **characterized in that** the layer to be applied in step c1) consists of a mixture comprising the pulverulent resin, natural and/or synthetic fibers, wear-reducing particles and optionally further additives.

5. Method according to claim 4, **characterized in that** as a further additive at least one additive selected from a group comprising conductive substances, flame retardants, luminescent substances and metals is used.

6. Method according to claim 4, **characterized in that** a conductive substance is used as a further additive.

7. Method according to any one of claims 4 to 6, **characterized in that** bleached cellulose fibers or organic polymer fibers are used as natural and/or synthetic fibers.

8. Method according to any one of claims 4 to 7, **characterized in that** aluminum oxides, corundum, boron carbides, silicon dioxides, silicon carbides and glass spheres are used as abrasion-resistant particles.

9. Method according to any one of the preceding claims, **characterized in that** the pulverulent resin to be spread in step b) is applied to the wood-based panel in an amount of 3 to 20 g/m², preferably 5 to 15 g/m², more preferably 6 to 10 g/m².

10. Method according to any one of the preceding claims, **characterized in that** the side of the wood-based panel to be scattered with the pulverulent resin in step b) is pretreated before scattered the pulverulent resin to improve the adhesion of the pulverulent resin.

11. Method according to claim 10, **characterized in that** the pretreatment of the side to be scattered in step b) comprises exposing the wood-based panel to moisture, or electrostatically charging the wood-based panel.

12. Method according to claim 10 or 11, **characterized in that** the pretreatment of the side to be scattered in step b) comprises an application of 0.5 - 5 g/m² of water, preferably 1 to 2 g/m² of water, to the wood-based panel.

13. Method according to any one of the preceding claims, **characterized in that** the pulverulent resin to be spread in step b) has a spreading density of 0.5 to 1.5 kg/I, preferably 0.8 to 1.0 kg/I, and a mean particle size of 10 to 50 µm, preferably 20 to 30 µm, more preferably 25 µm.

14. Method according to any one of the preceding claims, **characterized in that** the pulverulent resin is scattered on at least one side of at least one backing paper, and the backing paper scattered with the pulverulent resin is arranged with the resin toward the side of the wood-based panel.

## Revendications

1. Procédé servant à fabriquer un laminé constitué d'un panneau en matériau dérivé du bois et d'un papier décoratif disposé sur le panneau en matériau dérivé du bois,
comprenant les étapes suivantes :
a) la mise à disposition du panneau en matériau dérivé du bois ;
b) la répartition d'au moins une couche composée d'au moins une résine pulvérulente sur au moins un côté du panneau en matériau dérivé du bois, dans lequel la surface du côté à pulvériser avec la résine pulvérulente du panneau en matériau dérivé du bois n'est pas poncée et est pourvue d'une pellicule de presse ou d'une couche de décomposition,
c) le dépôt d'au moins un papier décoratif imprégné sur le côté faisant face au motif décoratif sur le côté, pourvu de la résine pulvérulente, du panneau en matériau dérivé du bois, et
c2) l'application d'au moins un papier overlay sur le papier décoratif ; et
d) la compression de la structure stratifiée composée du panneau en matériau dérivé du bois, de la résine pulvérulente et du papier décoratif.

2. Procédé selon la revendication 1, **caractérisé en ce que** l'au moins un papier overlay à appliquer lors de l'étape c2) est un papier overlay imprégné de résine.

3. Procédé servant à fabriquer un laminé constitué d'un panneau en matériau dérivé du bois et d'un papier décoratif disposé sur le panneau en matériau dérivé du bois
comprenant les étapes suivantes :
a) la mise à disposition du panneau en matériau dérivé du bois ;
b) la répartition d'au moins une couche composée d'au moins une résine pulvérulente sur au moins un côté du panneau en matériau dérivé du bois, dans lequel la surface du côté à pulvériser avec la résine pulvérulente du panneau en matériau dérivé du bois n'est pas poncée et est pourvue d'une pellicule de presse ou d'une couche de décomposition ;
c) le dépôt d'au moins un papier décoratif imprégné sur le côté faisant face au motif décoratif sur le côté, pourvu de la résine pulvérulente, du panneau en matériau dérivé du bois, et
c1) l'application d'au moins une autre couche d'une résine pulvérulente sur le côté supérieur du papier décoratif,
d) la compression de la structure stratifiée composée du panneau en matériau dérivé du bois, de la résine pulvérulente et du papier décoratif.

4. Procédé selon la revendication 3, **caractérisé en ce que** la couche à appliquer lors de l'étape c1) est constituée d'un mélange contenant la résine pulvérulente, des fibres naturelles et/ou synthétiques, des particules de réduction de l'usure, et éventuellement d'autres additifs.

5. Procédé selon la revendication 4, **caractérisé en ce qu'**est utilisé en tant qu'autre additif au moins un additif choisi parmi un groupe comprenant des substances conductrices, des retardateurs de flammes, des matières luminescentes et des métaux.

6. Procédé selon la revendication 5, **caractérisé en ce qu'**une substance conductrice est utilisée en tant qu'autre additif.

7. Procédé selon l'une quelconque des revendications 4 à 6, **caractérisé en ce que** sont utilisées en tant que fibres naturelles et/ou synthétiques des fibres de cellulose blanchies ou des fibres de polymère organiques.

8. Procédé selon l'une quelconque des revendications 4 à 7, **caractérisé en ce que** sont utilisés en tant que particules résistances à l'abrasion des oxydes d'aluminium, du corindon, des carbures de bore, des dioxydes de silicium, des carbures de silicium et des billes de verre.

9. Procédé selon l'une quelconque des revendications précédentes, **caractérisé en ce que** la résine pulvérulente à répartir lors de l'étape b) est appliquée sur le panneau en matériau dérivé du bois en une quantité de 3 à 20 g/m², de manière préférée 5 à 15 g/m², de manière particulièrement préférée 6 à 10 g/m².

10. Procédé selon l'une quelconque des revendications précédentes, **caractérisé en ce que** le côté du panneau en matériau dérivé du bois à pulvériser de la résine pulvérulente lors de l'étape b) est prétraité avant la répartition de la résine pulvérulente afin d'améliorer l'adhérence de la résine pulvérulente.

11. Procédé selon la revendication 10, **caractérisé en ce que** le prétraitement du côté à pulvériser lors de l'étape b) comprend une action visant à soumettre le panneau en matériau dérivé du bois à l'effet de l'humidité ou d'une charge électrostatique du panneau en matériau dérivé du bois.

12. Procédé selon la revendication 10 ou 11, **caractérisé en ce que** le prétraitement du côté à pulvériser lors de l'étape b) comprend une action visant à soumettre le panneau en matériau dérivé du bois à l'effet de 0,5 à 5 g/m² d'eau, de manière préférée de 1 à 2 g/m² d'eau.

13. Procédé selon l'une quelconque des revendications précédentes, **caractérisé en ce que** la résine pulvérulente à répartir lors de l'étape b) a une densité d'épandage allant de 0,5 à 1,5 kg/l, de manière préférée de 0,8 à 1,0 kg/l et une taille de particule moyenne allant de 10 à 50 µm, de manière préférée de 20 à 30 µm, en particulier de manière préférée de 25 µm.

14. Procédé selon l'une quelconque des revendications précédentes, **caractérisé en ce que** la résine pulvérulente est répartie sur au moins un côté d'au moins un papier de contrebalance et le papier de contrebalance pulvérisé de poudre de résine est disposé avec la résine en direction du côté du panneau en matériau dérivé du bois.
